(19) Europäisches Patentamt / European Patent Office / Office européen des brevets

(11) **EP 4 187 399 A1**

(12) **EUROPEAN PATENT APPLICATION**

(43) Date of publication:
**31.05.2023 Bulletin 2023/22**

(21) Application number: **21290077.3**

(22) Date of filing: **26.11.2021**

(51) International Patent Classification (IPC):
**G06F 15/167** (2006.01)     **G06F 9/54** (2006.01)
**G06N 3/04** (2023.01)     **G06N 3/063** (2023.01)

(52) Cooperative Patent Classification (CPC):
**G06F 9/544; G06F 9/546; G06F 15/167;**
G06N 3/045; G06N 3/063

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GrAI Matter Labs S.A.S.
75012 Paris (FR)**

(72) Inventors:
• **Pires Dos Reis Moreira, Orlando Miguel
5656 AG Eindhoven (NL)**
• **Qiao, Peng
5656 AG Eindhoven (NL)**

(74) Representative: **V.O.
P.O. Box 87930
2508 DH Den Haag (NL)**

(54) **MESSAGE BASED PROCESSOR AND METHOD OF OPERATING THE SAME**

(57)     A message based processor (1) is provided that comprises a plurality of processor modules (13a,...,13n) and a multicast unit (12). The processor modules (13a,...,13n), each comprise a module input (13ia,...,13in), a module output (13oa,...,13on), a memory bank (13ma,...,13mn) with a plurality of memory locations for storing a state value for respective processor element states, and a processing unit (13pa,...,13pn) configured to update said state values in accordance with event-messages received at said module input. The multicast unit (12) has a pattern memory (124) that specifies a multicast pattern as at least one set of pattern elements. The multicast unit (12) is configured to receive input messages (Min) and to multicast a respective target instruction (Mtarg(P,B,A)) to a respective target one of said processor modules and referring to a respective target memory location therein, in accordance with a respective mapping specified by each of said pattern elements in said at least one set of pattern elements. The message based processor (1) is configured to selectively provide output messages (Mout) in relation to said processor element states.

FIG. 1

**Description**

BACKGROUND

The present application relates to a message based processor.

The present application further relates to a method of operating a message based processor.

A message based processor comprises a plurality of message based processing elements that are configured to exchange data by messages. Message based processor elements may be provided as fully autonomous units that are capable to store their own state and to update that state in response to received input messages and optionally as a function of time. Alternatively, all or part of their functionality may be shared. For example each message based processor element may comprise a proper memory location in a shared memory unit and a plurality of message based processor elements may share a common processor to update their states in response to received input messages and optionally as a function of time.

Many applications involve convolution operations applied to data arrays, e.g. to two-dimensional, three dimensional or higher dimensional images or other types of data. Alternatively the data to be processed may be of a one-dimensional nature, e.g. audio data. In message based processing this implies that output data is multi-casted as a set of messages to recipient message based processing elements in accordance with a multicast patter, for example defined by a convolution pattern.

There is a need to efficiently use the distributed processing capacity so as to avoid computational bottlenecks.

SUMMARY

In order to address the above-mentioned need, a message based processor is provided herein in accordance with claim 1.

The message based processor as claimed herein comprises a plurality of processor modules. Each of these processor modules comprises a module input, a module output, a memory bank with a plurality of memory locations for storing a state value for respective processor element states, and a processing unit configured to update said state values in accordance with event-messages received at its module input. Optionally, the message based processor may comprise one or more other types of processing modules. The combined set of memory locations of the processor modules may define a feature space, wherein respective memory locations are associated with a respective coordinate, e.g. a respective x-coordinate in case of a 1-dimensional space, a respective pair of an x-coordinate and a y coordinate in case of a 2-dimensional space, or, more generally, a respective coordinate n-tuple in case of an n-dimensional space. In the feature space, the state value is representative for a value of a feature. The feature space or a partition thereof may define a feature map, where

The message based processor as claimed herein further comprises a multicast unit having a pattern memory. The pattern memory specifies a multicast pattern as at least one set of pattern elements. The multicast unit is configured to receive input messages and to multicast in receipt of an input message a plurality of target instructions. Each target instruction is directed to a respective target one of the processor modules and refers to a respective target memory location therein. The selection of the target processor module and the target memory location therein is in accordance with a respective mapping for each of the pattern elements in the at least one set of pattern elements.

The message based processor is configured to selectively provide output messages in relation to said processor element states. It may for example provide an output message in relation to a processor element state, if that processor element state has changed to a sufficient extent in response to a received target message.

As respective target instructions are directed to a respective target one of the processor modules, it is achieved that a computational load, is well distributed over the processor modules. The multicast pattern may for example represent a convolution kernel, for example a rectangular pattern, and each row therein comprises one set of pattern elements. Alternatively, a column therein may be considered as such. If the multicast pattern is relatively small, it may be treated as one set of pattern elements.

In an embodiment, one, more or all of the plurality of processor modules has a proper output message generator to provide said output messages. It may for example be contemplated to provide each processor module with a proper output message generator if the output/input ratio is relatively high. That is to say if it is likely that a processor module in response to a target instruction generated by the multicast unit upon receipt of an input message results in an output message.

In an alternative embodiment, two or more or all of the plurality of processor modules may share a common output message generator. A common output message generator may for example issue an output message for a processor module in response to a control signal from that processor module. The alternative embodiment may be contemplated if the output/input ratio is relatively low, i.e. if on average a processor module receives a plurality of target instructions before it is necessary to issue an output message.

Also combinations are possible, e.g. a message based processor wherein some processor modules have a proper output message generator, and other processor modules share a common output message generator.

An embodiment of the message based processor may have an input queue for queuing input event-messages. Alternatively, an embodiment may be contemplated wherein an input queue is absent, and wherein the message based processor may selectively accept an input event message and accordingly instruct its processor modules in conformance with the multicast pattern, or refuse the input message. Optionally it may return a message indicating this acceptance or refusal.

In an embodiment an output message in relation to a processor element state is indicative for a change in state of said processor element. In this way the communication load to a message exchange facility can be reduced.

In an embodiment, the designation of a target processor module and the processor element address therein may be independently determined for each pattern element of the multicast pattern. Alternatively, pattern elements in the pattern memory may comprise relative address information specifying a relative address and/or a relative target module indication with respective to a preceding or a succeeding pattern element in a pattern. Therewith the computation of the processor module and the processor element address therein is substantially simplified.

If the size of a multicast pattern is larger than the number of processor modules, i.e. if the multicast pattern comprises a number of pattern elements that is larger than the number of processor modules, then the multicast pattern may be partitioned into a plurality of sets of pattern elements. I.e. the at least one set of pattern elements is one of a plurality of sets of pattern elements in the multicast pattern. In that case, the multicast unit is configured to subsequently perform multicasting for each of the plurality of sets of pattern elements.

A message based processing system may comprise a plurality of message based processors as provided herein. The message based processors may be arranged in a sequence such that a message based processor provides its output messages as input messages to a next message based processor in said sequence.

Still further, a method of operating a message based processor is provided herein, as claimed in claim 10.

BRIEF DESCRIPTION OF THE DRAWINGS

These and other aspects are described in more detail with reference to the drawings. Therein:

FIG. 1 schematically shows an embodiment of a message based processor as provided herein;
FIG. 2 schematically shows a message based processing system comprising a plurality of message based processors;
FIG. 3A and 3B shows embodiments of a multicast unit;
FIG. 4A shows a first module in an embodiment of the multicast unit in more detail;
FIG. 4B shows a second module in said embodiment in more detail;
FIG. 5A shows a first module in another embodiment of the multicast unit in more detail;
FIG. 5B shows a second module in said other embodiment in more detail;
FIG. 6 shows a further example of a multicast unit 12;
FIG. 7A, 7B, 7C show a first example of multicasting an input message in accordance with a multicast pattern;
FIG. 8A, 8B, 8C show a second example of multicasting an input message in accordance with a multicast pattern;
FIG. 9A, 9B, 9C show a third example of multicasting an input message in accordance with a multicast pattern;
FIG. 10A, 10B, 10C show a fourth example of multicasting an input message in accordance with a multicast pattern;
FIG. 11 schematically shows a method of operating a message based processor.

DETAILED DESCRIPTION OF EMBODIMENTS

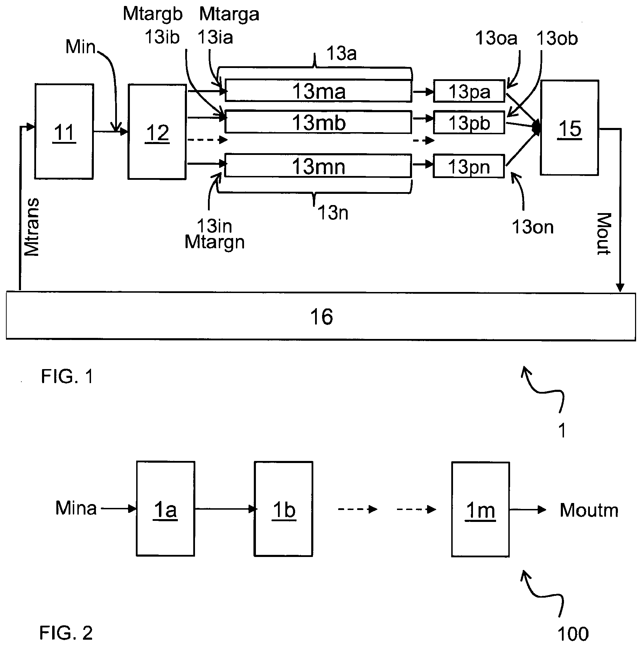

FIG. 1 schematically shows a message based processor 1 comprising a plurality (n) of processor modules 13a,...,13n and a multicast unit 12.

The plurality of processor modules each comprise a module input 13ia, 13ib, ..., 13in a module output 13ia, 13ib, ..., 13in, a memory bank 13ma, 13mb,..., 13mn with a plurality of memory locations for storing a state value for respective processor element states, and a processing unit 13pa, 13pb, ..., 13pn configured to update said state values in accordance with target instructions received at the module input.

The multicast unit 12 has a pattern memory that specifies a multicast pattern as at least one set of pattern elements, for example a row of pattern elements, which is one of plurality of rows of pattern elements in a square convolution kernel. The multicast unit 12 is configured to receive input messages Min and to multicast respective target instructions Mtarga, Mtargb, ..., Mtargn to respective target modules 13a,...,13n of the processor modules. A target instruction refers to a respective target memory location in the memory bank of its target module. The designation of each target instruction to its target module and the memory location therein is in accordance with a respective mapping specified for each of the pattern elements in the at least one set of pattern elements.

The message based processor 1 is configured to selectively provide output messages Mout in relation to processor element states. According to a first option, an output message in relation to a processor element state is issued, upon determining a first condition that the processor element state has changed to a sufficient extent in response to a received target instruction. Alternatively, as a second option, it may be the case that an output message indicative for a processor element state is issued upon determining a second condition that an instruction for that processor element was executed a predetermined number of times since a previous output message was issued for that processor element. As a third option, an output message indicative for a processor element state is issued upon determining a third condition that a predetermined number of clock cycles has lapsed since a previous output message was issued for that processor element. As a fourth option, an output message indicative for a processor element state is issued upon determining that one of two or more of said first condition, said second condition and said third condition is complied with. For example an output message is issued if the first condition is complied with or the third condition is complied with, whatever comes earlier.

In the example shown, the processor modules 13a,...,13n share a common output message generator 15 to provide their output messages. To that end the processor modules provide the common output message generator 15 with a control signal at their output, in response to which the common output message generator 15 generates the output message Mout.

In some applications it may be the case that the common message generator tends to be a bottleneck. In that case other configurations may be contemplated wherein processor modules have a proper output message generator to provide their output messages. Also, it may be contemplated to have a plurality of common output message generators, each one of which is shared by a subset of processor modules.

In the example shown, the output message generator 15 provides the output messages Mout to a common message transmission path 16 as transmitted messages Mtrans to an input queue 11, which on its turn provides the queued messages as input messages Min to the multicast unit 12. In this way for example a recursive operation may be implemented.

Various options are available for the manner in which a target module may update the state associated with the specified processor element address. One option is that the target module in response to the target instruction always performs the same operation, for example an operation that increases the state value of the state by a fixed value, for example modulo a counter value C. In that case the target instruction merely needs to specify the memory location of the processor element to be updated. Alternatively the target instruction may further specify a type of operation to be performed, e.g. an addition or a multiplication. Alternatively or additionally, the target instruction may further specify an operand value specifying for example a value to be added to or multiplied to the state value.

In case that the target instruction is to provide information other than the processor element address in the processor module, that information may be conveyed by the input message, retrieved from the pattern memory or be determined by combining information conveyed by the message and information retrieved from the pattern memory. For example, the input message may convey an opcode OPC and an operand value OPV, and a pattern element may provide a pattern value PV, in which case the target instruction instructs the target module to update the state value SV with an operation specified by the opcode OPC and the product of the operand value OPV and the pattern value PV, i.e.

$$SV \leftarrow f_{opc}(SV, OPV*PV)$$

Alternatively, the function specified by the opcode OPC may be a ternary function such that:

$$SV \leftarrow f_{opc}(SV, OPV, PV)$$

In an embodiment, the message based processor 1 may be provided as a component in a message based processing system 100, as schematically shown in FIG. 2. Therein each component 1a, 1b, ..., 1m is a species of a message based processor 1 of FIG. 1, however without the message transmission path 16. Instead, each of the components 1a, 1b, ..provides its output messages as input messages to a next component in the sequence. The message processing system 100 of FIG. 2, may for example realize a neural network processor, wherein each component 1a, 1b, ..., 1m is one layer therein.

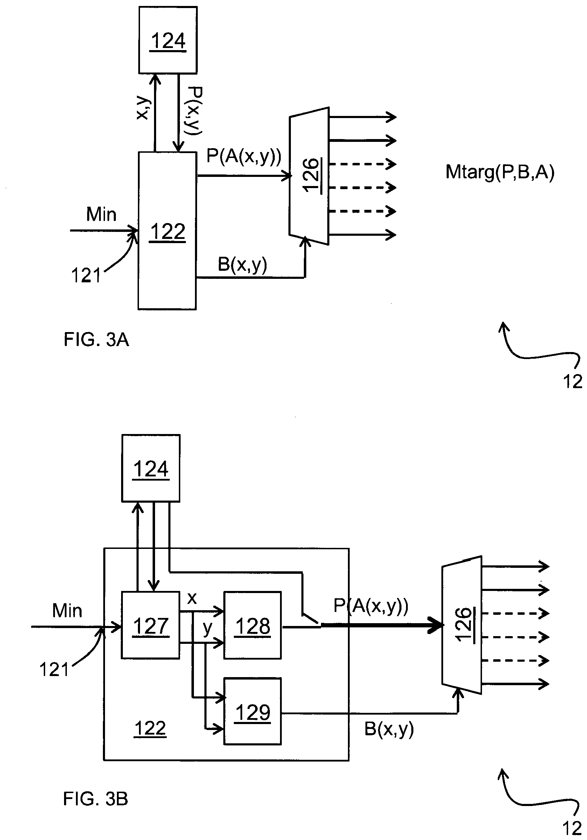

FIG. 3A shows a first embodiment of a multicast unit 12. The multicast unit 12 has a controller 122 with an input 121 to receive the input message Min from the message buffer 11, which may indicate a processor element base address A0 and a pattern indication specifying one of a plurality of patterns in a pattern memory 124. Alternatively a pattern indication may be absent, in which case a default pattern is selected. The pattern-elements may be arranged according to a predetermined format, e.g. a square or rectangle, but may alternatively be arranged in a more flexible manner, for example as described in European patent application 19165490.4 (P122638EP00) filed earlier by the applicant of this application. Therein the position of each pattern element is defined relative to the position of the its preceding pattern element.

The controller 122 generates coordinates x,y within a spatial range. The spatial range may be specified in the pattern memory 124, or may be indicated by the input message Min. The controller 122 accesses the pattern memory 124 to retrieve corresponding pattern information P(x,y) and generates control information B(x,y), P(A(x,y)) to control updating of respective processor elements. The control information B(x,y), for example computed with a dedicated module 129 (See FIG. 3B), determines which of the processor modules (13ma, 13mb,...,13mn) comprises the processor element to be updated, and the control information P(A(x,y)). The control information A(x,y), for example computed with a dedicated module 128 (See FIG. 3B) specifies the memory of the location of the processor element for which the state is to be updated in accordance with the pattern information in the pattern. In accordance therewith the multicast unit 12 transmits a target instruction Mtarg(P,B,A) to the one of the processor modules indicated by control information B(x,y) so that that processor module subsequently updates the state value of its processor element specified by control information A in accordance with pattern information P. The selection of the processor module that is to receive and process the target instruction Mtarg(P,B,A) is schematically indicated by the multiplexer unit 126. While the selected processor module processes the target instruction, the multicast unit 12 retrieves information for a subsequent pattern element, determines a new target processor module and the processor element therein to be updated in accordance with the information in the pattern element. This continues, until the target instruction corresponding to the last pattern element in the pattern was provided to its target module.

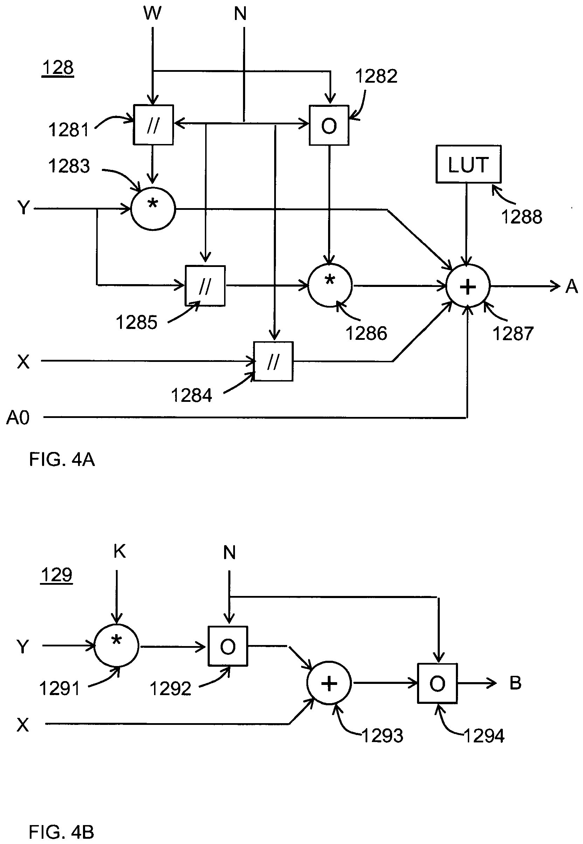

FIG. 4A shows an exemplary embodiment of an address computation module 128. The address computation module 128 is generally applicable for any combination of a line width W in a feature map and any number N of processor modules in the message based processor 1.

The address computation module 128 computes a first term (W//N)*y with elements 1281, 1283. Therein 1281 is an auxiliary element that computes: W//N = ⌊W/N⌋, i.e. the integer component of the ratio W/N. In another this value may be provided as a predetermined value.

The address computation module 128 computes a second term x//N = ⌊x/N⌋, the integer value of the ratio x/N with the element 1284.

The address computation module 128 further computes a third term (W mod N)*(y//N). To that end, auxiliary element 1282 computes the value W mod N. In another embodiment this value may be provided as a predetermined value. Element 1285 computes sub-term y//N and element 1286 multiplies this with the value W mod N. The three terms are added by element 1287 to a base value A0 to obtain the address A of the processor element to be updated. An additional term to be added may be provided by a lookup table 1288. Therewith address A of a processor element corresponding to a position x,y in the pattern is computed as:

$$A = A0 + (W//N)*y + (x//N) + (W \bmod N)*(y//N) + LUT$$

FIG. 4B shows an exemplary embodiment of a bank designation module 129. The bank designation module 129 is generally applicable for any combination of a kernel size K, specifying a number of pattern elements in a set of pattern elements, and any number N of processor modules in the message based processor 1. The bank designation module 129.computes the bank designation B as:
B = (((K*y) mod N + x) mod N, with multiplication element 1291, addition element 1293 and modulo elements 1292, 1294. It may be contemplated to omit the first modulo element 1292. In that case, the addition element 1293 should have a larger dynamic range.

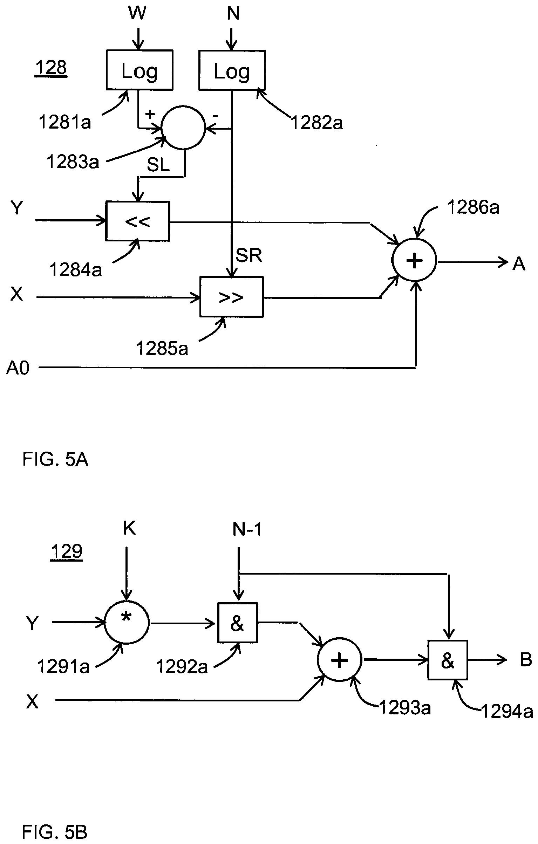

FIG. 5A, 5B shows modules in an alternative embodiment of the multicast unit 12. In this embodiment, it is presumed that the both the linewidth W and the number N of processor modules are a power of 2, so that. FIG. 5A shows the address calculation module 128 therein. Elements 1281a, 1282a and 1283a compute the auxiliary values SL, SR as:

$$SL = {}^2Log(W/N) = {}^2Log(W) - {}^2Log(N)$$

$$SR = {}^2Log(N)$$

In some alternative embodiments one or more of these terms may be provided as predetermined values, e.g. the term $^2Log(W)$ if the linewidth W is predetermined or the term SR= $^2Log(N)$ if the number N of processor modules is predetermined, or simply both the value SL and SR if both the values of W and N are predetermined.

The auxiliary value SL is used to compute the sub-term y«SL with binary shift left element 1284a and to compute the sub-term x»SR with binary shift right element 1285a. These sub-terms are added to base address A0 in addition element 1286a to obtain address A of a processor element corresponding to a position x,y in the pattern as

$$A = y << {}^2log(W/N) + x >> {}^2log(N)$$

It is presumed that W>N. Should W<N then the polarity of SL is negative, which implies that operation on y becomes a shift right operation with a number of bits corresponding to the absolute value of SL. In case W=N, the first term is reduced to y.

The elements 1291a, 1292a, 1293a, 1294a substantially correspond to elements 1291, 1292, 1293, 1294 in FIG. 4B, with this difference that the modulo elements 1292, 1294 are reduced to logical AND elements 1292a, 1294a respectively. These elements perform a logical AND operation with the value N-1. In practice this may be achieved in that the logical AND elements 1292a, 1294a simply pass the n least significant bits, wherein n = ${}^2Log(N)$. Therewith the bank designation module 129 of FIG. 5B computes the bank designation B as:

$$B = (((K^*y) \,\&\, (({}^2LogN) -1) + x ) \,\&\, (({}^2LogN)-1)$$

This corresponds to:

$$B = ((K^*y) + x ) \,\&\, (({}^2LogN)-1)$$

It would not make sense to eliminate element 1292a however, as this element merely is provided to pass the n least significant bits. Omitting this element would in fact imply that all bits of the output of element 1291a are provided to addition element 1293a, which would require additional bit lines and an increased dynamic range of the adder 1293a.

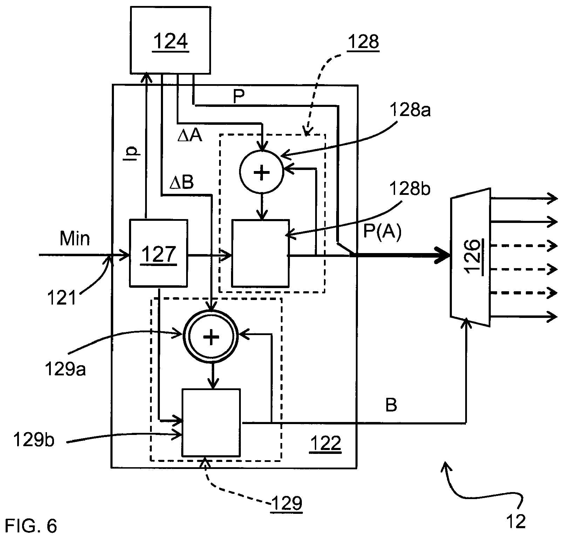

FIG. 6 shows a still further example of a multicast unit 12. In this embodiment the pattern elements in the pattern memory 124 comprise relative address information. The relative address information specifies a relative address (ΔA) and/or a relative target module indication (ΔB) with respect to a preceding or a succeeding pattern element in a pattern. In the embodiment shown therein, the address calculation unit 128 comprises an address register 128b and an address incrementation element 128a. Analogously, the bank designation module 129 comprises a bank index register 129b and a bank address incrementation element 129a.

In operation, the controller 127 receiving the message Min at input 121 initializes the address register 128b bank at a value conveyed by the message. It also initializes the index register 129b, typically with a predetermined reference value, e.g. 0, and accesses the pattern memory 124 at a start position Ip = Ip0 directly or indirectly (e.g. via a lookup table) specified by the message Min. From the accessed location it retrieves in addition to a pattern value P also a relative address ΔA and a relative target module indication ΔB. The controller 127 issues a target instruction to a processor module specified by the reference in index register 129b to update the state value of processor element A as specified in address register 128b in accordance with pattern value P. Subsequently the controller 127 instructs address incrementation element 128a to increment the current value in address register 128b with the relative address ΔA (which may be 0). It also instructs the bank address incrementation element 129a to increment the bank index specified in bank index register 129b with relative target module indication ΔB. The latter incrementation element performs a modulo operation, i.e. B←(B + ΔB) mod N. The controller 127 accesses the next location in the pattern, retrieves the pattern value P, the relative address ΔA and the relative target module indication ΔB, and repeats the above-mentioned steps until all elements of the pattern are processed. In this embodiment multiplications are avoided, which reduces a computational load.

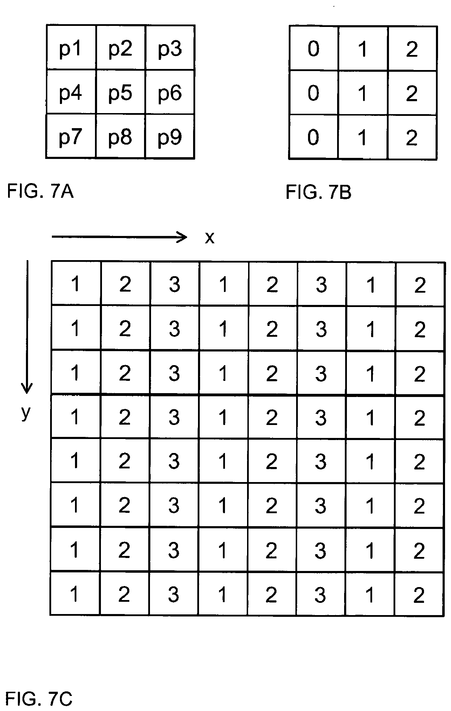

An example is now described with reference to FIG. 7A, 7B, 7C. Therein FIG. 7A depicts an exemplary K=3 x K=3 convolution kernel with pattern values p1, p2, ..,p9. For the purpose of this example, the value of the pattern values is not relevant. For example all pattern values may be equal, to implement a lowpass filter, or the convolution kernel may have pattern values implementing a discrete Laplacian operator.

FIG. 7B shows a relative address value used to designate one of the processor modules. It is presumed here that the message based processor has N=3 processor modules, in this example equal to the number of pattern elements, and that the linewidth W is equal to 8.

FIG. 7C shows an exemplary assignment of elements in a two-dimensional array to the respective memory banks of the processor modules. The assignment of a data element with coordinates (x,y) to a memory-bank n is determined as: n = x mod N + 1, wherein N is the number of memory banks, in this case 3.

An input message Min designates a base address A0 with coordinates xo, yo, and the multicast unit multicasts target instructions identifying a set of data elements with coordinates $x_0+x_{ci}$, $y_0+y_{ci}$, wherein $x_{ci}$, $y_{ci}$ are the relative displacements in accordance with the pattern, with i = 1 to np, wherein np is the number of pattern elements.

$$A = A0+(W//N)*y_{ci} + (x_{ci}//N) + (W \bmod N)*(y_{ci}//N)$$

As shown in FIG. 7C, the multicast unit 12 upon traversing the pattern, sequentially addresses each of the processor modules (13a,...,13n) because their number N equals the dimension K of the pattern.

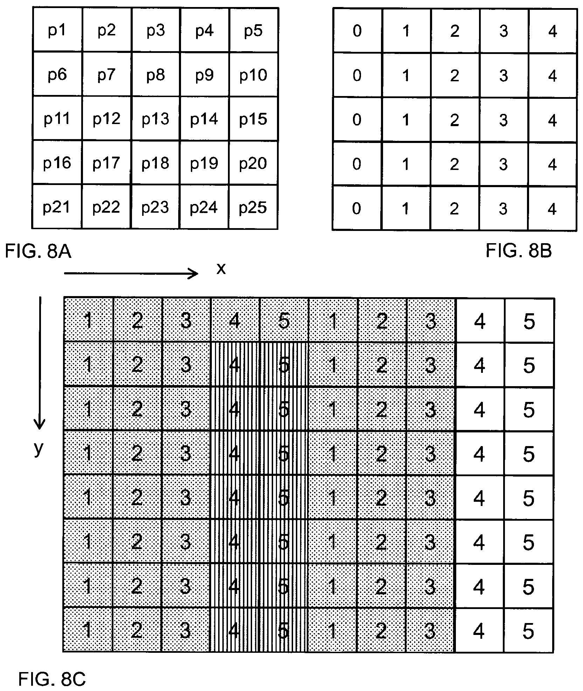

FIG. 8A, 8B, 8C show another example, wherein W=8, K=N=5. Therein FIG. 8A shows the pattern elements p1, p2, ..., p25 and FIG. 8B shows the corresponding displacement. In this example the elements (x,y) = (0,0), (1,0), (2,0), (3,0), (4,0), are mapped to address A within a respective one of the five modules 13a, ,13n. and the elements (5,0), (6,0) and (7,0) are mapped to address A+1 within a respective one of the first three of those modules, denoted as 1,2 and 3 in FIG. 8C. Similarly the elements (x,y) = (0,y1), (1,y1), (2,y1), (3,y1), (4,y1), of an arbitrary line y1 are mapped to address A+2y1 within a respective one of the five modules 13a, ,13n. and the elements (5,y1), (6,y1) and (7,y1) of that line y1 are mapped to address A+2y1+1 within a respective one of the first three of those modules, denoted as 1,2 and 3 in FIG. 8C.This would imply that the computational load of the processor modules, here denoted as 1,2,3,4,5 is unevenly distributed. The computational load of processor modules 4,5 is only half that of modules 1,2,3.

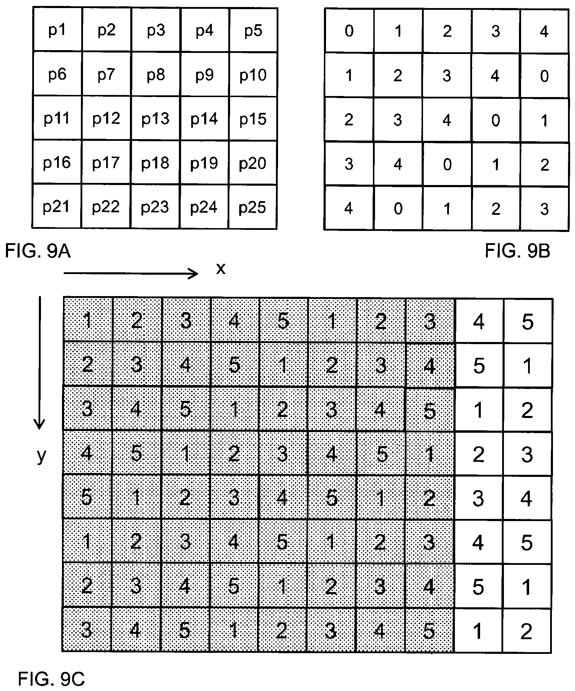

In the example of FIG. 9A, 9B, 9C, the allocation of lines y is mutually shuffled according to the scheme in FIG. 9B. It can be seen in FIG. 9C, that the computation load is on average uniformly distributed over the modules 1-5.

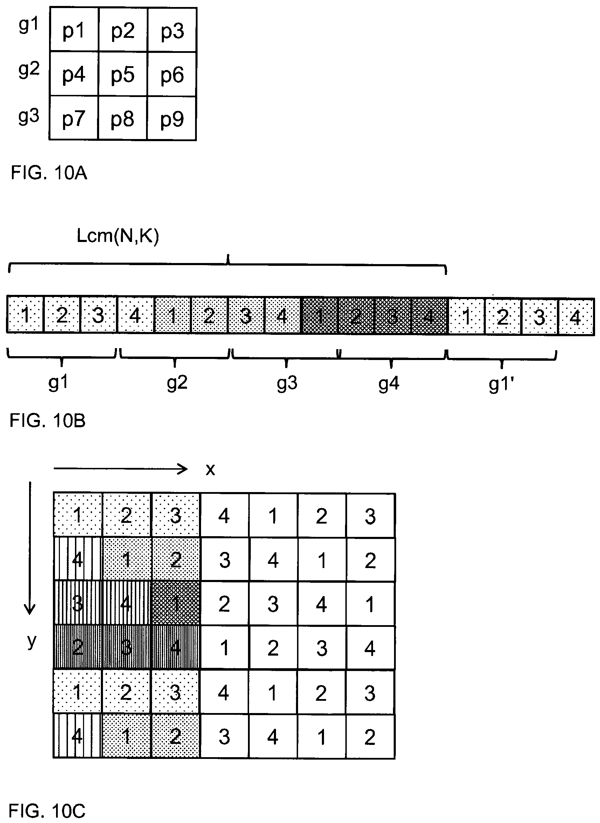

FIG. 10A, 10B, 10C show a further example of an address mapping that is based on the assumption that the kernel is used in a convolution operation. The mapping may for example be applied in a message based processing system 100, wherein each component 1a, 1b, ..., 1m is a species of a message based processor 1. One of those message based processors, e.g. 1a, may traverse a feature map having a first and a second coordinate, and for each coordinate transmit a message (Mouta in that case) to the subsequent component (1b in that case). The latter multicasts the message received for that coordinate to a range corresponding to the convolution pattern. The recipient (1b) updates the processor elements covered by the convolution pattern.

FIG. 10B illustrates how elements of subsequent lines of a convolution kernel are mapped to processor modules accordance with the mapping: B = (((K*y) mod G + x) mod G, wherein B is the assigned module and for this case, K = 3, and N=4.

Upon performing a convolution, the multicasted target instructions issued by the multicast unit 12 are directed to the processor modules in the sequence 1, 2, 3, 4, 1, 2; 3, 4, 1. Accordingly the last of these target instructions is directed to module 1. Component 1a, upon traversing its feature map in the direction x, will then transmit an instruction message to 1b which will be multicasted by the multicast unit 12 of 1b as target instructions to the processor modules in the sequence 2, 3, 4, 1, 2, 3, 4, 1, 2. Subsequently the multicast pattern is 3, 4, 1, 2, 3, 4, 1, 2, 3. Therewith the processor modules have the same computational load.in that each processor module receives a multicasted target instruction every four cycles.

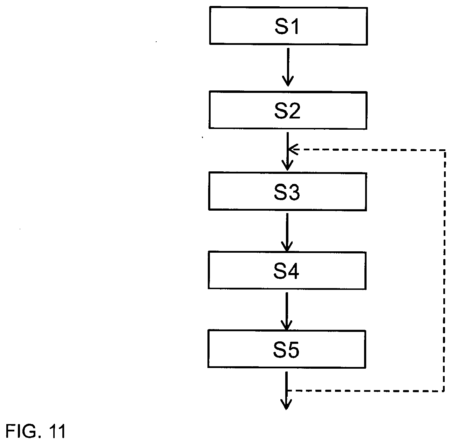

FIG. 11 schematically shows a method of operating a message based processor, for example an embodiment of the message based processor as described above with reference to one of the figures 1-10.

In a first step S1, the message based processor 1 receives an input message Min that specifies a base-address A0 in a feature map within the combined set of memory banks 13ma,...,13mn of the processor modules 13a,...,13n.

In a subsequent step S2, the message based processor 1 retrieves a multicast pattern comprising at least one set of pattern elements from a pattern memory 124. The multicast pattern (e.g. a convolution pattern) may be specified in the input message Min but may alternatively be a predetermined pattern. The pattern accessed in step S2 comprises at least one set of pattern elements. The pattern elements that comprise a pattern value, correspond to a respective mutually different processor module of the message based processor 1 and a respective target location in their memory bank.

In step S3, the input message is multicasted as target instructions to the processor modules in accordance with this correspondence. Accordingly the processor modules are instructed to update the state value of the one of their processor elements as determined by the base-address A0 and the further specification in the corresponding pattern element. The input message may be multicasted as target instructions simultaneously to each processor module designated by a pattern element. Alternatively, the processor modules may be instructed sequentially. The designation of the processor module and the address of processor element to be updated therein may be computed separately for each pattern element. Alternatively, the pattern elements in the pattern memory may comprise relative address information specifying a relative address and/or a relative target module indication with respective to a preceding or a succeeding pattern element in a pattern. Whereas this requires additional memory space, it simplifies the calculations.

In step S4, the processing unit proper to each of the assigned processor modules computing an updated state of the respective target location in their memory bank.

In step S5 the message based processor selectively provides a respective output message depending on the state computed in each of the respective target locations in the respective assigned processor modules. Whether or not an output message is generated may for example depend on whether a state change occurred that exceeds a threshold level. A shared output message generator may be used by two or more or all of the plurality of processor modules, for example if it is expected, for example from model calculations, that a relatively low number of output messages need to be generated in comparison to a number of incoming messages. Alternatively, one, more or all of the plurality of processor modules may have their proper output message generator to provide said output messages.

In practice the total number of pattern elements may be larger than the number of processor elements. As schematically indicated by the dotted flow, in that case steps S3, S4, S5 may be executed each time for a set of pattern elements, until for each pattern element in the pattern an instruction was provided to a processor module. For example, when a KxK pattern is applied, steps S3, S4, S5 may be executed each time for a subset of K pattern elements.

As already indicated above, exemplary embodiments may be implemented in digital electronic circuitry, or in computer hardware, firmware, software, or in combinations of them. Example embodiments may be implemented using a computer program product, e.g., a computer program tangibly embodied in an information carrier, e.g., in a machine-readable medium for execution by, or to control the operation of, data processing apparatus, e.g., a programmable processor, a computer, or multiple computers. In an example embodiment, the machine-readable medium may be a non-transitory machine- or computer-readable storage medium.

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

**Claims**

1. A message based processor (1) comprising:

   - a plurality of processor modules (13a,...,13n), each comprising a module input (13ia,...,13in), a module output (13oa,...,13on), a memory bank (13ma,...,13mn) with a plurality of memory locations for storing a state value for respective processor element states, and a processing unit (13pa,...,13pn) configured to update said state values in accordance with target instructions received at said module input;
   - a multicast unit (12) having a pattern memory (124), the pattern memory specifying a multicast pattern as at least one set of pattern elements, the multicast unit (12) being configured to receive input messages (Min) and in response to an input message to multicast respective target instructions (Mtarg(W,B,A) ) to respective target ones of said processor modules and referring to a respective target memory location therein, in accordance with a respective mapping for each of said pattern elements in said at least one set of pattern elements;
   - the message based processor (1) being configured to selectively provide output messages (Mout) in relation to said processor element states.

2. The message based processor according to claim 1, wherein the at least one set of pattern elements is one of a plurality of sets of pattern elements in the multicast pattern, and wherein the multicast unit (12) is configured to subsequently perform said multicasting for each of the plurality of sets of pattern elements.

3. The message based processor according to claim 2, wherein each of said plurality of sets of pattern elements provides for a different mapping to two or more or all of said plurality of processor modules and their respective target memory location

4. The message based processor according to one of the previous claims, wherein one, more or all of the plurality of processor modules (13a, ..., 13n) has a proper output message generator to provide said output messages.

5. The message based processor according to one of the previous claims, having a shared output message generator (15) to provide said output messages in response to control signals from two or more or all of the plurality of processor modules (13a, ..., 13n).

6. The message based processor according to one of the previous claims, having an input queue (11) for queuing input event-messages.

7. The message based processor according to one of the previous claims, wherein an output message (Mout) in relation to a processor element state is indicative for a change in state of said processor element.

8. The message based processor according to one of the previous claims, wherein pattern elements in the pattern memory (124) comprise relative address information specifying a relative address and/or a relative target module indication with respective to a preceding or a succeeding pattern element in a pattern.

9. A message based processing system (100) comprising a plurality of message based processors (1a, ..., 1n) according to one of the previous claims, which message based processors are arranged in a sequence and wherein a message based processor (1a) provides its output messages as input messages to a next message based processor (1b) in said sequence.

10. A method of operating a message based processor (1) comprising a plurality of processor modules (13a,...,13n), each comprising a module input (13ia,...,13in), a module output (13oa,...,13on), a memory bank (13ma,...,13mn) with a plurality of memory locations for storing a state value for respective processor element states, and a processing unit (13pa,...,13pn) configured to update said state values in accordance with messages received at said module input, the method comprising:

- receiving an input message (Min) specifying a base-address (A0), and in response thereto;
- accessing a multicast pattern comprising at least one set of pattern elements from a pattern memory (124);
- in accordance with a respective mapping specified by each of said pattern elements in said at least one set assigning for respective mutually different ones of said plurality of processor modules a respective target location in their memory bank;
- multicast a respective target instructions to said respective assigned processor modules, a respective target instruction specifying a respective target locations in the memory bank of its respective assigned processor module;
- the respective assigned processor modules with their processing unit computing an updated state of the respective target location in their memory bank;
- selectively providing a respective output message depending on the state computed in each of the respective target locations in the respective assigned processor modules.

11. The method of operating according to claim 10, wherein multicasting comprises assigning a respective pattern value to each target instruction and wherein the assigned processor modules are configured to compute with their processing unit an updated state of the respective target location in their memory in accordance with the respective pattern value.

12. The method of operating according to claim 10 or 11, wherein the at least one set of pattern elements is part of two or more sets of pattern elements in the multicast pattern, and wherein mutually different sets of pattern elements provide for mutually different combinations of assignments of processor modules and their respective target location in their memory bank, the method comprising for each of the two or more sets of pattern elements in the multicast pattern:

- multicasting respective target instructions to mutually different ones of said plurality of processor modules in accordance with the assignment of the each of the two or more sets of pattern elements;
- the assigned processor modules with their proper processing unit computing an updated state of the respective target location in their memory bank;
- selectively providing a respective output message depending on the state computed in each of the assigned processor modules.

Mtargb  Mtarga
13ib  13ia

Min

13a

13oa  13ob

13ma  13pa

11  12  13mb  13pb  15

13mn  13pn

Mtrans  Mout

13in  13on
Mtargn

16

FIG. 1

1

Mina → 1a → 1b ---→ ---→ 1m → Moutm

FIG. 2

100

FIG. 3A

Mtarg(P,B,A)

FIG. 3B

FIG. 4A

FIG. 4B

FIG. 5A

FIG. 5B

FIG. 6

| p1 | p2 | p3 |
|----|----|----|
| p4 | p5 | p6 |
| p7 | p8 | p9 |

FIG. 7A

| 0 | 1 | 2 |
|---|---|---|
| 0 | 1 | 2 |
| 0 | 1 | 2 |

FIG. 7B

x →

| 1 | 2 | 3 | 1 | 2 | 3 | 1 | 2 |
|---|---|---|---|---|---|---|---|
| 1 | 2 | 3 | 1 | 2 | 3 | 1 | 2 |
| 1 | 2 | 3 | 1 | 2 | 3 | 1 | 2 |
| 1 | 2 | 3 | 1 | 2 | 3 | 1 | 2 |
| 1 | 2 | 3 | 1 | 2 | 3 | 1 | 2 |
| 1 | 2 | 3 | 1 | 2 | 3 | 1 | 2 |
| 1 | 2 | 3 | 1 | 2 | 3 | 1 | 2 |
| 1 | 2 | 3 | 1 | 2 | 3 | 1 | 2 |

y ↓

FIG. 7C

| p1 | p2 | p3 | p4 | p5 |
|----|----|----|----|----|
| p6 | p7 | p8 | p9 | p10 |
| p11 | p12 | p13 | p14 | p15 |
| p16 | p17 | p18 | p19 | p20 |
| p21 | p22 | p23 | p24 | p25 |

FIG. 8A

| 0 | 1 | 2 | 3 | 4 |
|---|---|---|---|---|
| 0 | 1 | 2 | 3 | 4 |
| 0 | 1 | 2 | 3 | 4 |
| 0 | 1 | 2 | 3 | 4 |
| 0 | 1 | 2 | 3 | 4 |

FIG. 8B

x →

y ↓

| 1 | 2 | 3 | 4 | 5 | 1 | 2 | 3 | 4 | 5 |
|---|---|---|---|---|---|---|---|---|---|
| 1 | 2 | 3 | 4 | 5 | 1 | 2 | 3 | 4 | 5 |
| 1 | 2 | 3 | 4 | 5 | 1 | 2 | 3 | 4 | 5 |
| 1 | 2 | 3 | 4 | 5 | 1 | 2 | 3 | 4 | 5 |
| 1 | 2 | 3 | 4 | 5 | 1 | 2 | 3 | 4 | 5 |
| 1 | 2 | 3 | 4 | 5 | 1 | 2 | 3 | 4 | 5 |
| 1 | 2 | 3 | 4 | 5 | 1 | 2 | 3 | 4 | 5 |
| 1 | 2 | 3 | 4 | 5 | 1 | 2 | 3 | 4 | 5 |

FIG. 8C

| p1 | p2 | p3 | p4 | p5 |
|----|----|----|----|----|
| p6 | p7 | p8 | p9 | p10 |
| p11 | p12 | p13 | p14 | p15 |
| p16 | p17 | p18 | p19 | p20 |
| p21 | p22 | p23 | p24 | p25 |

FIG. 9A

| 0 | 1 | 2 | 3 | 4 |
|---|---|---|---|---|
| 1 | 2 | 3 | 4 | 0 |
| 2 | 3 | 4 | 0 | 1 |
| 3 | 4 | 0 | 1 | 2 |
| 4 | 0 | 1 | 2 | 3 |

FIG. 9B

x →

y ↓

| 1 | 2 | 3 | 4 | 5 | 1 | 2 | 3 | 4 | 5 |
|---|---|---|---|---|---|---|---|---|---|
| 2 | 3 | 4 | 5 | 1 | 2 | 3 | 4 | 5 | 1 |
| 3 | 4 | 5 | 1 | 2 | 3 | 4 | 5 | 1 | 2 |
| 4 | 5 | 1 | 2 | 3 | 4 | 5 | 1 | 2 | 3 |
| 5 | 1 | 2 | 3 | 4 | 5 | 1 | 2 | 3 | 4 |
| 1 | 2 | 3 | 4 | 5 | 1 | 2 | 3 | 4 | 5 |
| 2 | 3 | 4 | 5 | 1 | 2 | 3 | 4 | 5 | 1 |
| 3 | 4 | 5 | 1 | 2 | 3 | 4 | 5 | 1 | 2 |

FIG. 9C

|    | p1 | p2 | p3 |
|----|----|----|----|
| g1 |    |    |    |
| g2 | p4 | p5 | p6 |
| g3 | p7 | p8 | p9 |

FIG. 10A

Lcm(N,K)

| 1 | 2 | 3 | 4 | 1 | 2 | 3 | 4 | 1 | 2 | 3 | 4 | 1 | 2 | 3 | 4 |
|---|---|---|---|---|---|---|---|---|---|---|---|---|---|---|---|

g1     g2     g3     g4     g1'

FIG. 10B

x →

| 1 | 2 | 3 | 4 | 1 | 2 | 3 |
|---|---|---|---|---|---|---|
| 4 | 1 | 2 | 3 | 4 | 1 | 2 |
| 3 | 4 | 1 | 2 | 3 | 4 | 1 |
| 2 | 3 | 4 | 1 | 2 | 3 | 4 |
| 1 | 2 | 3 | 4 | 1 | 2 | 3 |
| 4 | 1 | 2 | 3 | 4 | 1 | 2 |

y ↓

FIG. 10C

FIG. 11

Europäisches Patentamt

European Patent Office

Office européen des brevets

# EUROPEAN SEARCH REPORT

Application Number

EP 21 29 0077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 716 154 A1 (GRAL MATTER LABS S A S [FR]) 30 September 2020 (2020-09-30) <br> * figures 2,3 * <br> * claims 1-4 * <br> * paragraphs [0014] - [0017] * <br> * paragraphs [0024] - [0025] * <br> * paragraph [0027] * <br> * paragraph [0029] * <br> * paragraph [0038] * <br> ----- | 1-12 | INV. <br> G06F15/167 <br> G06F9/54 <br> G06N3/04 <br> G06N3/063 |
| A | EP 3 839 829 A1 (GRAL MATTER LABS S A S [FR]) 23 June 2021 (2021-06-23) <br> * paragraphs [0066] - [0067] * <br> ----- | 1-12 | |
| | | | TECHNICAL FIELDS SEARCHED (IPC) <br><br> G06F <br> G06N |

The present search report has been drawn up for all claims

| Place of search | Date of completion of the search | Examiner |
|---|---|---|
| The Hague | 19 April 2022 | Dieben, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 29 0077

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2022

| Patent document cited in search report | | Publication date | Patent family member(s) | | Publication date |
|---|---|---|---|---|---|
| EP 3716154 | A1 | 30-09-2020 | EP | 3716154 A1 | 30-09-2020 |
| | | | EP | 3948674 A1 | 09-02-2022 |
| | | | WO | 2020193690 A1 | 01-10-2020 |
| EP 3839829 | A1 | 23-06-2021 | EP | 3839829 A1 | 23-06-2021 |
| | | | WO | 2021123035 A1 | 24-06-2021 |

EPO FORM P0459

For more details about this annex : see Official Journal of the European Patent Office, No. 12/82

**REFERENCES CITED IN THE DESCRIPTION**

**Patent documents cited in the description**

- EP 19165490